# FASCICULE DE BREVET EUROPEEN

(11) **EP 1 060 858 B1**
(45) Date de publication et mention de la délivrance du brevet: **02.05.2002**
(21) Numéro de dépôt: 00401657.2
(22) Date de dépôt: 13.06.2000
(51) Int. Cl.: B29C 33/50, A45D 40/16

(54) **Moule pour la fabrication d'un stick**
Form zur Herstellung eines Stiftes
Mould for making a stick

(30) Priorité: 15.06.1999 FR 9907535
(43) Date de publication de la demande: 20.12.2000
(73) Titulaire: L'OREAL, 75008 Paris (FR)
(72) Inventeur: Smolarek, François, 77410 Claye Souilly (FR)
(74) Mandataire: Leszczynski, André

(56) Documents cités:
- EP-A- 0 020 248
- WO-A-89/01366
- FR-A- 2 343 574
- PATENT ABSTRACTS OF JAPAN vol. 018, no. 271 (C-1203), 24 mai 1994 (1994-05-24) -& JP 06 046757 A (ASAHI DENKA KOGYO KK;OTHERS: 01), 22 février 1994 (1994-02-22) -& DATABASE WPI Week 199412 Derwent Publications Ltd., London, GB; AN 1994-096951 XP002147574

## Description

La présente invention concerne un moule pour la fabrication de sticks, notamment à usage cosmétique.

L'invention est tout particulièrement adaptée à la réalisation de sticks de rouge à lèvres, déodorants, ou de sticks pommettes.

On connaît par la demande de brevet européen EP-A-0 686 468 un procédé de fabrication de bâtonnets de rouge à lèvres.

Ce procédé connu met en oeuvre un moule souple qui est conditionné thermiquement avant l'introduction à l'intérieur d'une quantité prédéterminée d'une composition à l'état fondu destinée à constituer, après refroidissement et solidification, un bâtonnet de rouge à lèvres.

Le démoulage du bâtonnet s'effectue en deux temps.

Dans un premier temps, on applique une dépression à l'extérieur du moule, à sa partie supérieure seulement, de manière à provoquer l'expansion de cette dernière et l'apparition d'un jeu annulaire autour du bâtonnet à l'intérieur du moule.

Ce jeu permet d'engager sur le bâtonnet un organe d'extraction, constitué par exemple par la coupelle d'un étui de rouge à lèvres, tandis que la partie inférieure du bâtonnet reste maintenue par le moule.

Dans un deuxième temps, une fois l'organe d'extraction engagé sur le bâtonnet, la dépression est exercée à l'extérieur du moule, sur l'ensemble de sa hauteur de manière à désolidariser la partie inférieure du bâtonnet et du moule et faciliter l'enlèvement du bâtonnet.

Le choix du matériau constituant le moule doit satisfaire à un certain nombre d'exigences, à savoir notamment :
- il doit être physiquement et chimiquement compatible avec la composition constituant le bâtonnet,
- il doit résister à la température de cette composition à l'état fondu, soit 100°C environ,
- il doit résister aux contraintes mécaniques et thermiques subies lors du cycle de fabrication d'un bâtonnet, et
- il doit être dimensionnellement stable.

La présente invention vise à rendre plus facile le choix du matériau destiné à constituer le moule, afin de permettre par exemple l'utilisation de matériaux permettant d'allonger sa durée de vie.

Elle y parvient par le fait que la paroi latérale du moule comporte des zones affaiblies favorisant sa déformation radiale.

Ainsi, selon l'invention, l'aptitude du moule à se déformer pour le démoulage du bâtonnet de rouge à lèvres ne résulte plus seulement de l'élasticité propre du matériau utilisé pour le réaliser mais également de la présence des zones affaiblies précitées, ce qui présente de nombreux avantages.

En particulier, on peut utiliser pour réaliser le moule des matériaux moins souples que ceux actuellement utilisés mais présentant une meilleure tenue, soit par exemple parce que leur compatibilité chimique avec la composition du stick est améliorée, soit par exemple dans le cas de matériaux présentant une plasticité extrinsèque obtenue par l'adjonction d'un plastifiant, parce que l'on peut éviter les problèmes liés à l'exsudation du plastifiant en diminuant la teneur.

Dans une réalisation particulière, il est possible de jouer sur la forme extérieure du moule pour diminuer les épaisseurs de parois, ce qui permet à la fois d'augmenter l'aptitude de déformation du moule et d'améliorer les échanges thermiques.

Dans une réalisation particulière, les zones affaiblies sont obtenues au moyen d'évidements réalisés sur la paroi latérale du moule.

De préférence, ces évidements s'étendent longitudinalement sensiblement sur toute la hauteur du moule jusqu'à son extrémité inférieure.

Dans une réalisation particulière, les évidements sont constitués par des entailles réparties régulièrement à la périphérie du moule.

De préférence, le fond de ces entailles est arrondi, de manière à ne pas créer une amorce de déchirure de la paroi du moule.

Toujours dans une réalisation particulière, la profondeur des entailles décroît au fur et à mesure que l'on se rapproche des extrémités inférieures du moule.

La profondeur maximum des entailles peut être supérieure ou égale à 4 mm par exemple, et le moule peut comporter entre 16 et 20 entailles par exemple.

L'épaisseur de la paroi du moule au niveau des zones affaiblies peut être supérieure ou égale à 1 mm par exemple.

D'autres caractéristiques et avantages de l'invention ressortiront à la lecture de la description détaillée qui va suivre, d'un exemple de mise en oeuvre non limitatif de l'invention, et à l'examen du dessin annexé sur lequel :
- la figure 1 représente en coupe axiale schématique un moule souple,
- la figure 2 est une coupe transversale partielle selon le plan de coupe II-II de la figure 1.

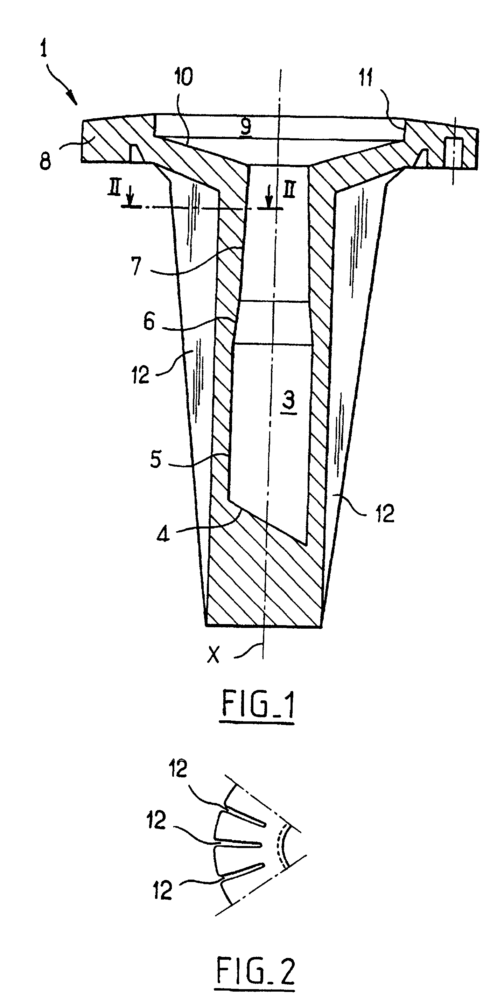

Le moule 1 représenté sur les figures 1 et 2 comporte une cavité 3 ouverte vers le haut, ayant la forme du bâtonnet que l'on désire fabriquer.

Le moule 1 est réalisé, dans l'exemple décrit, en un matériau élastomère.

Le moule peut être notamment réalisé en un caoutchouc de fluorosilicone, notamment à base de polysiloxanes, tel que décrit par exemple dans le brevet EP-0 589 386.

De manière plus spécifique, on peut utiliser un matériau tel que celui vendu par la société DOW CORNING sous la référence MX5412 ou celui vendu par la société SAFIC ALCAN sous la référence ALCAN SII 2164V/100. De tels matériaux sont particulièrement adaptés pour le moulage de compositions cosmétiques contenant du silicone de type PDMS (polydiméthyl siloxane) que l'on utilise dans certains rouges à lèvres.

La cavité 3 du moule 1 présente en son fond un pan incliné 4, lequel se raccorde à une surface cylindrique 5, de révolution autour d'un axe de symétrie X, elle-même prolongée vers le haut, à mi-hauteur environ de la cavité 3, par deux surfaces coniques successives 6 et 7 d'axe X, convergeant en direction de l'ouverture du moule.

Le moule 1 comporte à sa partie supérieure une collerette 8 destinée à sa fixation sur un organe de convoyage.

La surface conique 7 débouche dans le fond d'une cuvette 9 s'évasant vers le haut, délimitée inférieurement par une surface conique 10 et radialement par une surface cylindrique 11.

Le diamètre de la surface cylindrique 5 est dans l'exemple décrit de 9 mm environ et le pan 4 est incliné à 65° par rapport à l'axe X.

Le profil extérieur du moule 1 est généralement tronconique jusqu'à la collerette 8, s'élargissant vers le haut. Il est possible de jouer sur la forme extérieure du moule pour diminuer les épaisseurs de parois.

Des évidements longitudinaux 12, équirépartis angulairement autour de l'axe X, sont réalisés à la périphérie du moule 1 et facilitent sa déformation radiale, comme cela sera précisé dans la suite.

Dans l'exemple décrit, le moule 1 comporte dix-huit évidements 12, se présentant sous la forme d'entailles séparées angulairement de 20°.

La largeur de chaque évidement 12 est de 0,5 mm par exemple.

Le fond de chaque évidement 12 est arrondi et s'étend parallèlement à l'axe X depuis l'extrémité inférieure du moule 1 jusqu'à la base de la paroi du moule délimitant la cuvette 9.

Les évidements 12 créent des zones affaiblies qui facilitent la déformation radiale du moule comme indiqué plus haut, tandis que les zones de plus forte épaisseur entre les évidements 12 assurent la stabilité de la forme du moule pendant le coulage de la composition et son refroidissement notamment.

Le moule 1 peut être utilisé de manière conventionnelle, comme décrit dans la demande de brevet EP-A-0 686 468 précitée.

Bien entendu, l'invention n'est pas limitée à la fabrication de bâtonnets de rouge à lèvres, mais s'applique encore au moulage d'autres compositions sous forme de bâtonnets.

## Revendications

1. Moule (1) pour la fabrication d'un stick, notamment à usage cosmétique, **caractérisé par le fait que** sa paroi latérale comporte des zones affaiblies favorisant sa déformation radiale.

2. Moule selon la revendication précédente, **caractérisé par le fait que** lesdites zones affaiblies sont obtenues au moyen d'évidements (12) réalisés sur la paroi latérale du moule.

3. Moule selon la revendication précédente, **caractérisé par le fait que** lesdits évidements (12) s'étendent longitudinalement sensiblement sur toute la hauteur du moule jusqu'à son extrémité inférieure.

4. Moule selon la revendication 2 ou 3, **caractérisé par le fait que** lesdits évidements sont constitués par des entailles réparties régulièrement à la périphérie du moule.

5. Moule selon la revendication 4, **caractérisé par le fait que** le fond desdites entailles est arrondi.

6. Moule selon l'une des revendications 4 et 5, **caractérisé par le fait que** la profondeur des entailles décroît au fur et à mesure que l'on se rapproche de l'extrémité inférieure du moule.

7. Moule selon la revendication 6, **caractérisé par le fait que** la profondeur maximum des entailles est supérieure ou égale à 4 mm.

8. Moule selon l'une quelconque des revendications 4 à 7, **caractérisé par le fait qu'**il comporte entre 16 et 20 entailles de préférence 18.

9. Moule selon l'une quelconque des revendications précédentes, **caractérisé par le fait que** l'épaisseur de la paroi du moule au niveau des zones affaiblies est supérieure ou égale à 1 mm.

## Patentansprüche

1. Form (1) zur Herstellung eines Stifts insbesondere zu kosmetischen Zwecken, **dadurch gekennzeichnet, dass** ihre Seitenwand geschwächte Bereiche aufweist, die ihre radiale Verformung begünstigen.

2. Form nach dem vorhergehenden Anspruch, **dadurch gekennzeichnet, dass** diese geschwächten Bereiche mit Hilfe von Aussparungen (12) erhalten werden, die auf der Seitenwand der Form vorgesehen sind.

3. Form nach dem vorhergehenden Anspruch, **dadurch gekennzeichnet, dass** diese Aussparungen (12) sich in Längsrichtung im wesentlichen über die ganze Höhe der Form bis zu ihrem unteren Ende erstrecken.

4. Form nach Anspruch 2 oder 3, **dadurch gekennzeichnet, dass** diese Aussparungen aus Einschnitten bestehen, die auf dem Umfang der Form gleichmäßig verteilt angeordnet sind.

5. Form nach Anspruch 4, **dadurch gekennzeichnet, dass** der Boden dieser Einschnitte abgerundet ist.

6. Form nach einem der Ansprüche 4 und 5, **dadurch gekennzeichnet, dass** die Tiefe der Einschnitte mit zunehmender Annäherung an das untere Ende der Form abnimmt.

7. Form nach Anspruch 6, **dadurch gekennzeichnet, dass** die Höchsttiefe der Einschnitte größer als oder gleich 4 mm ist.

8. Form nach einem der Ansprüche 4 bis 7, **dadurch gekennzeichnet, dass** sie zwischen 16 und 20, vorzugsweise 18 Einschnitte aufweist.

9. Form nach einem der vorhergehenden Ansprüche, **dadurch gekennzeichnet, dass** die Dicke der Wand der Form auf Höhe der geschwächten Bereiche größer als oder gleich 1 mm ist.

## Claims

1. Mould (1) for manufacturing a stick, especially for cosmetic use, **characterized in that** its side wall comprises weakened zones favouring its radial deformation.

2. Mould according to the preceding claim, **characterized in that** the said weakened zones are obtained by means of recesses (12) made in the side wall of the mould.

3. Mould according to the preceding claim, **characterized in that** the said recesses (12) extend substantially longitudinally over the entire height of the mould down to its lower end.

4. Mould according to Claim 2 or 3, **characterized in that** the said recesses consist of cuts distributed regularly at the periphery of the mould.

5. Mould according to Claim 4, **characterized in that** the bottom of the said cuts is rounded.

6. Mould according to either of Claims 4 and 5, **characterized in that** the depth of the cuts decreases as the lower end of the mould is gradually approached.

7. Mould according to Claim 6, **characterized in that** the maximum depth of the cuts is greater than or equal to 4 mm.

8. Mould according to any one of Claims 4 to 7, **characterized in that** it comprises between 16 and 20 cuts, preferably 18.

9. Mould according to any one of the preceding claims, **characterized in that** the thickness of the wall of the mould at the weakened zones is greater than or equal to 1 mm.
